# EUROPÄISCHE PATENTANMELDUNG

(11) **EP 1 280 105 A2**
(43) Veröffentlichungstag der Anmeldung: **29.01.2003**
(21) Anmeldenummer: 02016578.3
(22) Anmeldetag: 24.07.2002
(51) Int. Cl.: G06T 7/00

(54) **Verfahren und Vorrichtung zur Registrierung zweier 3D-Bilddatensätze**

(30) Priorität: 25.07.2001 DE 10136160
(71) Anmelder: Philips Corporate Intellectual Property GmbH, 20099 Hamburg (DE); Koninklijke Philips Electronics N.V., 5621 BA Eindhoven (NL)
(72) Erfinder: Koppe, Reiner, Dr., Weisshausstrasse 2, 52066 Aachen (DE); Klotz, Erhard Artur, Weisshausstrasse 2, 52066 Aachen (DE); Op de Beek, John, Weisshausstrasse 2, 52066 Aachen (DE)
(74) Vertreter: Volmer, Georg, Dipl.-Ing.

(57) **Zusammenfassung**

Die Erfindung betrifft ein Verfahren und eine Vorrichtung zur Registrierung zweier 3D-Bilddatensätze eines mit mehreren, in den 3D-Bilddatensätzen enthaltenen Markern versehenen Abbildungsobjekts. Um eine solche Registrierung, die beispielsweise bei der digitalen Subtraktionsangiographie eingesetzt werden kann, möglichst einfach und schnell durchführen zu können, auch wenn das Abbildungsobjekt größere Verschiebungen und/oder Drehungen vor der Erfassung des zweiten 3D-Bilddatensatzes gemacht hat, wird erfindungsgemäß ein Verfahren mit den folgenden Schritten vorgeschlagen:
a) Ermittlung der Positionen der Marker in den 3D-Bilddatensätzen in einem dem jeweiligen 3D-Bilddatensatz zugeordneten Koordinatensystem,
b) Ermittlung der Abstände zwischen jeweils zwei Markern und/oder der Winkel zwischen jeweils zwei sich in einem Marker schneidenden und durch zwei weitere Marker verlaufenden Geraden,
c) Ermittlung korrespondierender Abstände und/oder Winkel in den 3D-Bilddatensätzen,
d) Ermittlung der korrespondierenden Marker anhand der ermittelten korrespondierenden Abstände und/oder Winkel,
e) Ermittlung einer Transformationsvorschrift zur Transformation eines der 3D-Bilddatensätze in das Koordinatensystem des anderen 3D-Bilddatensatzes.

## Beschreibung

Die Erfindung betrifft ein Verfahren und eine entsprechende Vorrichtung zur Registrierung zweier 3D-Bilddatensätze eines mit mehreren, in den 3D-Bilddatensätzen enthaltenen Marken versehenen Abbildungsobjekts. Außerdem betrifft die Erfindung eine Bildgebungsvorrichtung zur Erfassung von medizinischen 3D-Bilddatensätzen eines Abbildungsobjekts sowie ein Computerprogrammprodukt.

Insbesondere im medizinischen Bereich besteht häufig die Anforderung, zwei oder mehr 3D-Bilddatensätze desselben Abbildungsobjekts, beispielsweise eines Teils eine Patienten, mit ausreichender Genauigkeit zu kombinieren. Solche 3D-Bilddatensätze können dabei mit der gleichen oder unterschiedlichen Bildgebungsmodalitäten wie beispielsweise der Röntgentechnik, der Computertomographie, der Ultraschalltechnik oder der Magnetresonanztomographie, erstellt sein, wobei die 3D-Bilddatensätze in mehr oder weniger großen zeitlichen Abständen erfasst wurden.

Um die gewünschte Kombination der 3D-Bilddatensätze vornehmen zu können, ist eine sogenannte Registrierung erforderlich, bei der die räumliche Beziehung der beiden 3D-Bilddatensätze zueinander bestimmt und eine Transformationsvorschrift ermittelt wird, um einen der beiden 3D-Bilddatensätze in das Koordinatensystem des jeweils anderen 3D-Bilddatensatzes zu transformieren. Dazu werden häufig künstliche oder anatomische Marker verwenden, anhand deren die räumliche Beziehung der 3D-Bilddatensätze zueinander bestimmt wird.

Ein solches Verfahren ist aus "Automated registration of multimodal brain image sets using computer vision methods", G. Secretta, P. Gregson, Computers in biology and medicine 29 (1999) 333-359 bekannt. Dabei wird ein Rahmen mit zwei Dreiecken, an denen abbildbare Marker angebracht sind, am Kopf eines Patienten angebracht. Mittels Computerbildverarbeitung werden dann aus den abgebildeten Markern die Positionen der Dreiecke bestimmt, woraus dann anschließend mittels der Quaternion-Mathematik die Transformationsvorschrift zur Transformation eines 3D-Bilddatensatzes in das Koordinatensystem des anderen 3D-Bilddatensatzes ermittelt wird.

Der vorliegenden Erfindung liegt die Aufgabe zugrunde, ein alternatives und einfaches Verfahren zur Registrierung zweier 3D-Bilddatensätze anzugeben. Diese Aufgabe wird erfindungsgemäß durch ein Verfahren gemäß Anspruch 1 gelöst, welches die folgenden Schritte aufweist:
a) Ermittlung der Positionen der Marker in den 3D-Bilddatensätzen in einem dem jeweiligen 3D-Bilddatensatz zugeordneten Koordinatensystem,
b) Ermittlung der Abstände zwischen jeweils zwei Markern und/oder der Winkel zwischen jeweils zwei sich in einem Marker schneidenden und durch zwei weitere Marker verlaufenden Geraden,
c) Ermittlung korrespondierender Abstände und/oder Winkel in den 3D-Bilddatensätzen,
d) Ermittlung der korrespondierenden Marker anhand der ermittelten korrespondierenden Abstände und/oder Winkel,
e) Ermittlung einer Transformationsvorschrift zur Transformation eines der 3D-Bilddatensätze in das Koordinatensystem des anderen 3D-Bilddatensatzes.

Der Erfindung liegt dabei die Erkenntnis zugrunde, dass die genannten Abstände und Winkel zwischen fest angeordneten Markern im Falle einer orthogonalen Transformation des Abbildungsobjekts zwischen der Erfassung der beiden 3D-Bilddatensätze invariant sind. Dies bedeutet, dass sich aus den Abständen und/oder Winkeln zwischen den Markern in den jeweiligen 3D-Bilddatensätzen feststellen lässt, welche Markerabbildungen in den beiden 3D-Bilddatensätzen von dem identischen Marker stammen, auch wenn zwischen der Erfassung der 3D-Bilddatensätze eine verhältnismäßig große Verschiebung oder Drehung des Abbildungsobjekts stattgefunden hat. Auch bei einer geringen Dehnung oder Stauchung des Abbildungsobjekts kann das erfindungsgemäße Verfahren meist noch angewendet werden und zu einem sinnvollen Ergebnis führen. Insbesondere ist das erfindungsgemäße Verfahren auch bei sehr großen Verschiebungen oder Drehungen des Abbildungsobjektes geeignet, während bekannte Registrierungsverfahren insbesondere für sehr kleine Verschiebungen oder Drehungen ausgelegt sind und bei großen Verschiebungen oder Drehungen überhaupt nicht oder sehr ungenau funktionieren.

Vorteilhafte Ausgestaltungen des erfindungsgemäßen Verfahrens sind in den Unteransprüchen angegeben. Eine erfindungsgemäße Vorrichtung zur Registrierung ist in Anspruch 9 angegeben. Diese wird vorteilhaft insbesondere bei einer Bildgebungsvorrichtung zur Erfassung von medizinischen 3D-Bilddatensätzen eines Abbildungsobjekts gemäß Anspruch 10 eingesetzt, wobei eine solche Bildgebungsvorrichtung bevorzugt eine Röntgeneinrichtung, insbesondere ein Röntgen-Computertomograph oder eine C-Bogen-Röntgeneinrichtung ist, mit denen beispielsweise 3D-Rotationsangiogramme erfasst werden können.

Die Erfindung betrifft schließlich auch ein Computerprogrammprodukt mit Computerprogramm-Mitteln zum Veranlassen Computers zum Ausführen des erfindungsgemäßen Verfahrens, wenn das Computerprogrammprodukt auf einem Computer ausgeführt wird.

Es sei angemerkt, dass die erfindungsgemäßen Vorrichtungen in gleicher oder ähnlicher Weise weitergebildet sein können wie das erfindungsgemäße Verfahren und wie in den Unteransprüchen bezüglich des erfindungsgemäßen Verfahrens angegeben ist.

Die Anzahl der erforderlichen Marker und die Anzahl der zu bestimmenden Winkel und/oder Abstände richtet sich insbesondere danach, welche Genauigkeit gewünscht ist und wie eindeutig sich die in den beiden 3D-Bilddatensätzen bestimmten Abstände und/oder Winkel einander zuordnen lassen. Wenn Eindeutigkeit ganz klar gegeben ist, reichen unter Umständen bereits drei Marker sowie die Bestimmung von drei Abständen oder Winkeln aus, um die Transformationsvorschrift bestimmen zu können. Sollen jedoch alle Freiheitsgrade einer Verschiebung und Rotation des Abbildungsobjektes berücksichtigt und bestimmt werden, sollten vorzugsweise sechs oder mehr Abstände und/oder Winkel bestimmt werden, wozu mindestens vier, vorzugsweise mindestens sechs Marker an dem Abbildungsobjekt angebracht werden. Bevorzugt werden erfindungsgemäße Abstände zwischen allen Kombinationen jeweils zweier Marker und alle Winkel bestimmt.

Bevorzugt ist weiter vorgesehen, dass die Marker an dem Abbildungsobjekt so angebracht sind, dass die Abstände und die Winkel möglichst unterschiedlich groß sind, so dass eine eindeutige Zuordnung der in einem ersten 3D-Bilddatensatz bestimmten Winkel und Abständen zu in dem zweiten 3D-Bilddatensatz bestimmten Winkeln bzw. Abständen möglich ist. Die Zuordnung erfolgt dabei dadurch, dass einem Abstand bzw. Winkel in dem ersten 3D-Bilddatensatz derjenige Abstand bzw. Winkel in dem zweiten 3D-Bilddatensatz zugeordnet wird, der hinsichtlich der Größe möglichst identisch oder nahe bei dem Winkel bzw. Abstand des ersten 3D-Bilddatensatzes liegt.

Bevorzugt erfolgt die Zuordnung der korrespondierenden Marker in den 3D-Bilddatensätzen iterativ anhand der korrespondieren Abstände in den einzelnen 3D-Bilddatensätzen, d. h., es sind mehrere Schritte nötig, um aus korrespondierenden Abständen auch die korrespondierenden Marker bestimmen zu können. Alternativ ergeben sich aus den ermittelten korrespondierenden Winkeln die korrespondierenden Marker am Schnittpunkt der Geraden, zwischen denen die korrespondierenden Winkel liegen, unmittelbar. Allerdings ist bei gleicher Markeranzahl die Zahl der Winkel, d.h. die Suchmenge, in denen ein korrespondierender Winkel gesucht werden muss, größer als die Anzahl der Abstände zwischen jeweils zwei Markern.

Bevorzugt werden als Marker künstliche, an dem Abbildungsobjekt angebrachte Marker verwendet. Diese sind so ausgestaltet, dass sie in der jeweiligen Bildgebungsmodalität sichtbar in den erstellten Bildern erscheinen, so dass deren Position in dem 3D-Bilddatensatz bzw. dem zugeordneten Koordinatensystem eindeutig bestimmt werden kann. Die Marker können dabei im Wesentlichen beliebig an dem Abbildungsobjekt verteilt werden, wobei vorzugsweise die Abstände und/oder Winkel zwischen den Markern möglichst unterschiedlich sein sollen. In der Röntgentechnik bestehen solche Marker häufig aus mit Kontrastmittel gefüllten Kugeln, die auf den Patienten aufgeklebt werden. In der Magnetresonanztomographie werden häufig mit Wasser gefüllte Kugeln verwendet, die an dem Patienten angebracht werden. Es sind jedoch auch andere Ausgestaltungen denkbar (z. B. Metallkugeln). Die Kugeln können auch auf einem Hilfsrahmen oder auf ein Band aufgebracht oder sogar implantiert sein. Darüber hinaus können auch anatomische Besonderheiten, wie beispielsweise besondere Knochenstrukturen, Gefäßbaumverzweigungen oder ähnliche charakteristische Stellen der Anatomie, die sehr gut in den erstellten Bildern sichtbar sind und deren Positionen sich bestimmen lassen, als Marker verwendet werden.

Das erfindungsgemäße Verfahren kann insbesondere bei der 3D-Rotationsangiographie, und dabei insbesondere zur Subtraktionsangiographie, vorteilhaft eingesetzt werden, wobei vor der Subtraktion zweier 3D-Bilddatensätze das erfindungsgemäße Registrierungsverfahren durchgeführt werden muss zur Registrierung im Wesentlichen vollständiger 3D-Bilddatensätze.

Es ist mit dem erfindungsgemäßen Registrierungsverfahren auch möglich, unvollständige 3D-Bilddatensätze zu kombinieren, die aus unterschiedlichen Positionen des Abbildungsobjekts oder mit unterschiedlicher Abbildungsgeometrie erfasst wurden und somit zu einem vollständigen 3D-Bilddatensatz zusammenzusetzen. Beispielsweise ist denkbar, dass mittels einer C-Bogen-Röntgeneinrichtung, die nur eine Trajektorie von 90° um den Patienten fahren kann, zwei unvollständige 3D-Bilddatensätze erfasst werden, beispielsweise einmal aus frontaler Richtung bezüglich des Patienten und einmal aus seitlicher Richtung, wobei der Patient einmal um 90 Grad gedreht werden muss, und diese beiden "halben" 3D-Bilddatensätze dann mit dem erfindungsgemäßen Verfahren zusammenzusetzen, indem anhand der Marker eine Transformationsvorschrift bestimmt wird.

Die Erfindung wird nachfolgend anhand der Zeichnungen näher erläutert. Es zeigen:
- Figur 1: eine schematische Darstellung einer erfindungsgemäßen Röntgeneinrichtung;
- Figur 2: zwei Verteilungen von Markern in unterschiedlichen 3D-Bilddatensätzen und
- Figur 3: eine Darstellung zur Erläuterung der Subtraktionsangiographie unter Anwendung des erfindungsgemäßen Verfahrens.

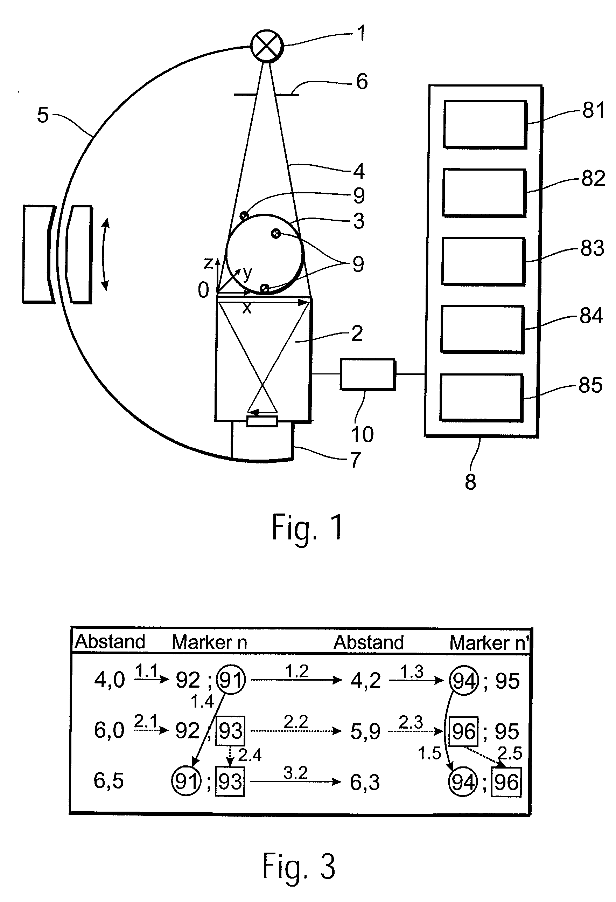

In Figur 1 ist eine schematische Darstellung einer erfindungsgemäßen C-Bogen-Röntgeneinrichtung gezeigt. An einem C-Bogen 5 ist dort eine Röntgenquelle 1 und der Röntgenquelle 1 gegenüberliegend ein Röntgenbildverstärker 2 mit einer TV-Kamera 7 angebracht. Durch die Öffnung einer Blende 6 kann ein Röntgenstrahlenbündel 4 auf ein Aufnahmeobjekt 3, beispielsweise einen Patienten oder Ausschnitt eines Patienten treffen, das die Röntgenstrahlung unterschiedlich absorbiert. Zur Erfassung von Projektionsdaten des Aufnahmeobjekts 3 wird die Röntgenquelle 1 entlang einer Trajektorie um das Aufnahmeobjekt 3 herum geführt, wobei aus unterschiedlichen Positionen jeweils ein Projektionsdatensatz erfasst wird. Aus diesen Projektionsdatensätzen kann anschließend ein 3D-Bilddatensatz rekonstruiert werden, aus dem wiederum gewünschte Bilder, beispielsweise Schichtbilder des Aufnahmeobjekts 3 aus unterschiedlichen Schichten und Blickwinkeln erstellt werden können.

Das erfindungsgemäße Verfahren soll nun anhand des Beispiels der Substraktionsangiographie näher erläutert werden. Dazu werden zwei möglichst vollständige 3D-Bilddatensätze desselben Abbildungsobjekts erfasst, wobei bei der ersten Erfassung Projektionsdaten erfasst werden, ohne dass dem Aufnahmeobjekt ein Kontrastmittel injiziert wird, während bei der zweiten Datenerfassung dem Aufnahmeobjekt ein Kontrastmittel injiziert wird. Nach der Konstruktion der beiden 3D-Bilddatensätze und Subtraktion der beiden 3D-Bilddatensätze kann dann beispielsweise der Verlauf des Gefäßbaumes in dem Subtraktionsbild erhalten werden.

Bei beiden Datenerfassungen befindet sich das Aufnahmeobjekt 3 möglichst in der gleichen Position. An dem Aufnahmeobjekt 3 sind mehrere Marker 9 fest angebracht, wie in Figur 1 zu erkennen ist. Diese Marker 9 sind möglichst so angebracht, dass die Abstände zwischen jeweils zwei Markern und die Winkel zwischen zwei Geraden, die sich in einem Marker schneiden und durch jeweils einen weiteren Marker verlaufen, unterschiedlich groß sind. Diese Marker werden somit bei beiden Datenerfassungen miterfasst und sind somit deutlich in den 3D-Bilddatensätzen erkennbar. Da jedoch die Datenerfassung eine längere Zeit in Anspruch nehmen kann, passiert es häufig, dass sich ein Patient während der Datenerfassung oder in der Pause zwischen der Erfassung der Projektionsdaten für den ersten und den zweiten 3D-Bilddatensatz bewegt. Bevor jedoch eine Subtraktion der beiden 3D-Bilddatensätze vorgenommen werden kann, muss somit eine Registrierung und ein Ausgleich dieser Bewegung erfolgen; es muss somit die Bewegung des Patienten rechnerisch ausgeglichen bzw. zurückgerechnet werden. Dazu ist eine geeignete Recheneinheit 8 vorgesehen, der die mittels der Rekonstruktionseinheit 10 rekonstruierten 3D-Bilddatensätze als Eingangsdaten zugeführt werden.

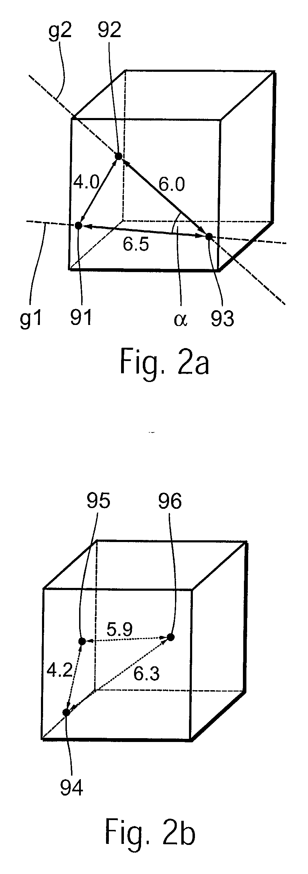

Die Recheneinheit 8 weist zunächst Mittel 81 zur Ermittlung der Positionen der Marker in dem jeweiligen 3D-Bilddatensatz bzw. in einem zugeordneten Koordinatensystem auf. Weiter sind Mittel 82 vorgesehen zur Ermittlung der Abstände zwischen jeweils zwei Markern in den einzelnen 3D-Bilddatensätzen und/oder zur Ermittlung der Winkel zwischen jeweils sich in einem Marker schneidenden und durch zwei weitere Marker verlaufenden Geraden in den einzelnen 3D-Bilddatensätzen. Dies soll anhand von Fig. 2 näher erläutert werden. In Fig. 2a sind drei Marker 91, 92, 93 in einem ersten 3D-Bilddatensatz sowie die Abstände zwischen diesen drei Markern 91, 92, 93 gezeigt. In Figur 2b sind die selben drei Marker 94, 95, 96 in einem zweiten 3D-Bilddatensatz gezeigt, ebenfalls mit den jeweiligen Abständen zwischen den einzelnen Markern 94, 95, 96. Es ist dabei jedoch nicht bekannt, welcher Marker 94, 95, 96 in dem zweiten 3D-Bilddatensatz den Markern 91, 92, 93 in dem ersten 3D-Bilddatensatz zuzuordnen ist. Dies wird anhand des erfindungsgemäßen Verfahrens weiter bestimmt.

Die Bestimmung der Positionen der Marker 91 - 96 in den einzelnen 3D-Bilddatensätzen sowie die Abstände zwischen den Markern erfolgt jeweils mit bekannten Verfahren. Beispielsweise kann die Abstandsbestimmung mittels stereometrischer Vermessung erfolgen. Für jeden 3D-Bilddatensatz kann somit eine sogenannte Abstandstabelle erstellt werden, die im gezeigten Beispiel wie folgt aussehen würden:

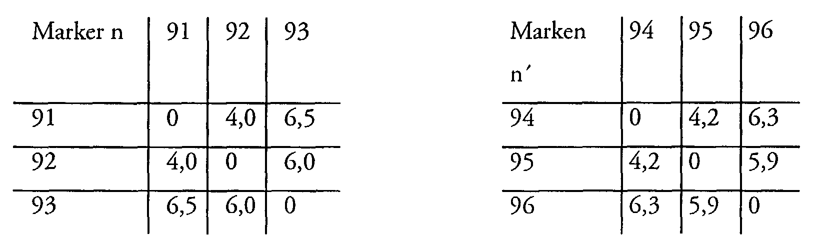

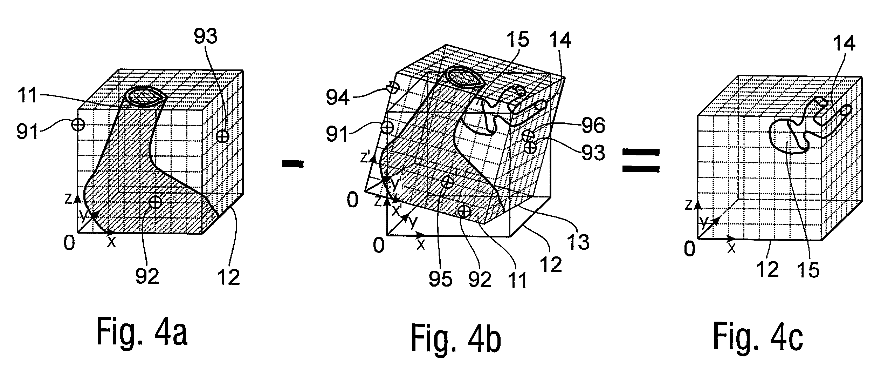

Mit Hilfe dieser Tabellen wird nachfolgend mit geeigneten Mitteln 83 und 84 in Fig. 1 die Korrespondenz zwischen Markern in den beiden 3D-Bilddatensätzen bestimmt. Dies erfolgt iterativ. Dazu wird zunächst mit der Recheneinheit 83 die Korrespondenz zwischen Abständen zwischen der ersten und zweiten Tabelle, d.h. dem ersten und zweiten 3D-Bilddatensatz hergestellt. Beispielsweise wird in einem ersten Schritt (1.2 in Figur 3) der zu dem Abstand 4.0 zwischen den Markern 91 und 92 korrespondierende Abstand in der zweiten Tabelle gesucht. Dies ist der Abstand 4.2, der dem Abstand 4.0 am nächsten liegt und zwischen den Markern 94 und 95 besteht. Im nächsten Schritt (2.2) wird nun zu einem weiteren Abstand im ersten 3D-Bilddatensatz, beispielsweise dem Abstand 6.0 zwischen den Markern 92 und 93, der korrespondierende Abschnitt im zweiten 3D-Bilddatensatz ermittelt. Dies ist der Abstand 5.9 zwischen den Markern 95 und 96. Aus den ersten beiden iterativen Schritten lässt sich somit bereits schließen, dass der Marker 92 dem Marker 95 entsprechen muss. In einem dritten iterativen Schritt (3.2), der sich bei drei Markern automatisch ergibt, wird der korrespondierende Abstand zu dem Abstand 6.5 bestimmt, woraus sich der Abstand 6.3 im zweiten 3D-Bilddatensatz ergibt. Damit lässt sich dann schließlich unter Berücksichtigung der Ergebnisse der ersten beiden iterativen Schritte folgen, dass der Marker 91 den Marker 94 und der Marker 93 dem Marker 96 entsprechen muss. Diese Schlussfolgerungen hinsichtlich der korrespondierenden Marker werden mittels der Recheneinheit 84 getroffen.

In dem in Figur 3 gezeigten Diagramm sind diese iterativen Schritte nochmals gezeigt und die einzelnen aufeinanderfolgenden Rechenschritte mit 1.1 bis 1.5 bzw. 2.1 bis 2.5, 3.2 durch Pfeile verdeutlicht.

Nachdem nun die korrespondierenden Marker in den beiden 3D-Bilddatensätze bestimmt sind, kann mittels der Einheit 85 die entsprechende Transformationsvorschrift bestimmt werden, die eine Verschiebung und/oder Rotation des Abbildungsobjekts zwischen der Erfassung des ersten und zweiten 3D-Bilddatensatzes rechnerisch wieder rückgängig macht. Dazu wird für jeden einzelnen Marker ermittelt, welche Bewegung er von der Position im ersten 3D-Bilddatensatz zur Position im zweiten 3D-Bilddatensatz gemacht hat. Aus den Bewegungen aller Punkte wird schließlich die gesuchte Transformationsvorschrift bestimmt, mit der dann einer der beiden 3D-Bilddatensätze in das Koordinatensystem des anderen 3D-Bilddaten-satzes transformiert wird.

Die Transformationsvorschrift weist drei Verschiebungs- und drei Winkelparameter auf. Mit diesen geometrischen Daten kann die Transformation durch Rotation und Verschiebung eines der 3D-Bilddatensätze erfolgen. Die 3D-Bilddatensätze werden dann beispielsweise durch eine tri-lineare Interpolation oder durch eine neue Rekonstruktion mit angepasstem Rekonstruktionsvolumen in der korrekten geometrischen Position in Übereinstimmung gebracht. Danach kann die gewünschte Subtraktion der beiden 3D-Bilddatensätze erfolgen.

Dies ist nochmals näher in Figur 4 gezeigt. Dort ist in Figur 4a ein erstes Koordinatensystem 12 dargestellt, in dem ein erster 3D-Bilddatensatz gezeigt ist, in dem als Beispiel eine Knochenstruktur 11 abgebildet ist. Auch die Marker 91, 92, 93 sind in dem Koordinatensystem 12 abgebildet. In Figur 4b ist ein zweites Koordinatensystem 13, das verdreht zu dem Koordinatensystem 12 liegt, gezeigt. Dies bedeutet, dass sich das Abbildungsobjekt, beispielsweise der Patient, vor der Erfassung des zweiten 3D-Bilddatensatzes entsprechend gedreht hat. In dem zweiten 3D-Bilddatensatz ist wiederum die Knochenstruktur 11 sowie außerdem zwei Blutgefäße 14 mit einem Aneurysma 15 abgebildet, da vor der Erfassung des zweiten 3D-Bilddatensatzes ein Kontrastmittel gespritzt wurde. Weiter sind in dem zweiten 3D-Bilddatensatz die Marker 94, 95, 96 gezeigt, die sich entsprechend mitbewegt haben gegenüber den ursprünglichen Positionen (91, 92, 93) derselben Marker, die ebenfalls zum Vergleich hier mit dargestellt sind, jedoch nicht Bestandteil des zweiten 3D-Bilddatensatzes sind.

In Figur 4c ist schließlich das Ergebnis des erfindungsgemäßen Verfahrens nach Registrierung, Berechnung des Transformationsvorschrift, entsprechender Transformation und Subtraktion der beiden zueinander registrierten und in ein übereinstimmendes Koordinatensystem gebrachten 3D-Bilddatensätze gezeigt. Die Knochenstruktur 11 sowie die Marker haben sich gegenseitig aufgehoben, so dass nur die Gefäße 14 mit dem Aneurysma 15 sichtbar bleiben in dem Koordinatensystem 12, in das der zweite 3D-Bilddatensatz mittels der Transformationsvorschrift transformiert worden ist.

Anstelle der Abstände zwischen den einzelnen Markern in den jeweiligen 3D-Bilddatensätzen können auch die Winkel zwischen jeweils zwei Geraden durch zwei unterschiedliche Marker, die sich in einem dritten Marker schneiden, ermittelt und zur Bestimmung der korrespondierenden Marker genutzt werden. Zwei solche Geraden g1 und g2, die durch die Marker 91 bzw. 92 verlaufen und sich unter dem Winkel α im Marker 93 schneiden, sind beispielhaft in Figur 2a gezeigt. Bei drei Markern können somit in jedem 3D-Bilddatensatz drei Winkel bestimmt werden, wobei für jeden Winkel wieder der korrespondierende Winkel in dem anderen 3D-Bilddatensatz ermittelt wird. Sofern sich der korrespondierende Winkel eindeutig bestimmen lässt, ist unmittelbar auch zu dem Marker am Scheitelpunkt, in Figur 2a also dem Marker 93, der korrespondierende Marker an dem entsprechenden Scheitelpunkt im zweiten 3D-Bilddatensatz bekannt, ohne dass weitere iterative Schritte erforderlich wären. Allerdings ist eine solche Winkeltabelle im Allgemeinen größer als eine Abstandstabelle, da zur Festlegung jedes Winkels drei Markerpositionen erforderlich sind, während zur Festlegung eines Abstandes nur zwei Markerpositionen erforderlich sind. Die Suchmenge der Winkel für die Bestimmung der Korrespondenz ist somit größer.

In einer weiteren Ausgestaltung kann auch vorgesehen sein, dass eine Mischung aus Abständen und Winkeln zur Bestimmung der korrespondierenden Marker verwendet wird. Weiter ist die Erfindung nicht auf die digitale Subtraktionsangiographie beschränkt, sondern kann grundsätzlich immer dann angewendet werden, wenn zwei 3D-Bilddatensätze zueinander registriert werden müssen, um mögliche Verschiebungen oder Rotationen des Aufnahmeobjekts auszugleichen. Die 3D-Bilddatensätze können auch aus unterschiedlichen Modalitäten stammen, wobei jedoch die Marker immer an den identischen Positionen an dem Abbildungsobjekt angebracht sein müssen. Das erfindungsgemäße Verfahren kann außerdem auch zur Registrierung von mehr als zwei 3D-Bilddatensätzen verwendet werden, indem beispielsweise jeder 3D-Bilddatensatz auf den vorhergehenden 3D-Bilddatensatz registriert wird oder indem einer der 3D-Bilddatensätze als Referenz-Bilddatensatz verwendet wird, auf den alle registriert werden.

## Patentansprüche

1. Verfahren zur Registrierung zweier 3D-Bilddatensätze eines mit mehreren, in den 3D-Bilddatensätzen enthaltenen Markern versehenen Abbildungsobjekts mit den Schritten:
a) Ermittlung der Positionen der Marker in den 3D-Bilddatensätzen in einem dem jeweiligen 3D-Bilddatensatz zugeordneten Koordinatensystem,
b) Ermittlung der Abstände zwischen jeweils zwei Markern und/oder der Winkel zwischen jeweils zwei sich in einem Marker schneidenden und durch zwei weitere Marker verlaufenden Geraden,
c) Ermittlung korrespondierender Abstände und/oder Winkel in den 3D-Bilddatensätzen,
d) Ermittlung der korrespondierenden Marker anhand der ermittelten korrespondierenden Abstände und/oder Winkel,
e) Ermittlung einer Transformationsvorschrift zur Transformation eines der 3D-Bilddatensätze in das Koordinatensystem des anderen 3D-Bilddatensatzes.

2. Verfahren nach Anspruch 1,
**dadurch gekennzeichnet,**
**dass** mindestens drei, vorzugsweise mindestens sechs, Marker an dem Abbildungsobjekt angebracht und in den 3D-Bilddatensätzen enthalten sind und dass mindestens drei, vorzugsweise mindestens sechs, Abstände und/oder Winkel ermittelt werden.

3. Verfahren nach Anspruch 1,
**dadurch gekennzeichnet,**
**dass** die Marker derart angeordnet sind, dass die Abstände zwischen jeweils zwei Markern und/oder die Winkel zwischen jeweils zwei sich in einem Marker schneidenden durch zwei weitere Marker verlaufenden Geraden möglichst unterschiedlich sind.

4. Verfahren nach Anspruch 1,
**dadurch gekennzeichnet,**
**dass** aus den ermittelten korrespondierenden Abständen die korrespondierenden Marker iterativ bestimmt werden.

5. Verfahren nach Anspruch 1,
**dadurch gekennzeichnet,**
**dass** sich aus den ermittelten korrespondierenden Winkeln unmittelbar die korrespondierenden Marker am Schnittpunkt der Geraden ergeben.

6. Verfahren nach Anspruch 1,
**dadurch gekennzeichnet,**
**dass** als Marker künstliche, an dem Abbildungsobjekt angebrachte Marker oder anatomische Besonderheiten verwendet werden.

7. Verfahren nach Anspruch 1,
**dadurch gekennzeichnet,**
**dass** das Verfahren bei der Subtraktionsangiographie verwendet wird, um zwei 3D-Bilddatensätze zu registrieren und in ein gemeinsames Koordinatensystem zu transformieren, bevor ein Subtraktionsbild erstellt wird.

8. Verfahren nach Anspruch 1,
**dadurch gekennzeichnet,**
**dass** die 3D-Bilddatensätze unvollständig sind und aus unterschiedlichen Positionen erfasst wurden und dass das Verfahren dazu verwendet wird, die unvollständigen 3D-Bilddatensätze zu einem möglichst vollständigen 3D-Bilddatensatz zusammenzusetzen.

9. Vorrichtung zur Registrierung zweier 3D-Bilddatensätze eines mit mehreren, in den 3D-Bilddatensätzen enthaltenen Markern versehenen Abbildungsobjekts mit:
a) Mitteln zur Ermittlung der Positionen der Marker in den 3D-Bilddatensätzen in einem dem jeweiligen 3D-Bilddatensatz zugeordneten Koordinatensystem,
b) Mitteln zur Ermittlung der Abstände zwischen jeweils zwei Markern und/oder der Winkel zwischen jeweils zwei sich in einem Marker schneidenden und durch zwei weitere Marker verlaufenden Geraden,
c) Mitteln zur Ermittlung korrespondierender Abstände und/oder Winkel in den 3D-Bilddatensätzen,
d) Mitteln zur Ermittlung der korrespondierenden Marker anhand der ermittelten korrespondierenden Abstände und/oder Winkel,
e) Mitteln zur Ermittlung einer Transformationsvorschrift zur Transformation eines der 3D-Bilddatensätze in das Koordinatensystem des anderen 3D-Bilddatensatzes.

10. Bildgebungsvorrichtung zur Erfassung von medizinischen 3D-Bilddatensätzen eines Abbildungsobjekts mit einer Vorrichtung zur Registrierung von 3D-Bilddatensätzen nach Anspruch 9.

11. Bildgebungsvorrichtung nach Anspruch 10,
**dadurch gekennzeichnet,**
**dass** die Bildgebungsvorrichtung eine Röntgeneinrichtung, insbesondere ein Röntgen-Computertomograph oder eine C-Bogen-Röntgeneinrichtung ist.

12. Computerprogrammprodukt mit Computerprogrammmitteln zum Veranlassen eines Computers zum Ausführen des Verfahrens nach einem der Ansprüche 1 bis 8.
